# EUROPÄISCHE PATENTANMELDUNG

(11) **EP 1 595 742 A2**
(43) Veröffentlichungstag der Anmeldung: **16.11.2005**
(21) Anmeldenummer: 05009163.6
(22) Anmeldetag: 26.04.2005
(51) Int. Cl.: B60Q 3/04, B60Q 1/14

(54) **Lenkstockhebel eines Kraftfahrzeugs**

(30) Priorität: 11.05.2004 DE 102004023112
(71) Anmelder: GM Global Technology Operations, Inc., Detroit, MI 48265-3000 (US)
(72) Erfinder: Bald, Heiko, 64397 Modautal (DE)
(74) Vertreter: Daniel, Ulrich W.P.

(57) **Zusammenfassung**

Um einen Bereich eines Innenraums eines Kraftfahrzeugs ohne erheblichen Aufwand beleuchten zu können, weist ein Lenkstockhebel (4) eines Lenkstockmoduls des Kraftfahrzeuges ein Beleuchtungselement (10) zur Beleuchtung des gewünschten Bereichs auf.

## Beschreibung

Die Erfindung bezieht sich auf einen Lenkstockhebel eines Lenkstockmoduls eines Kraftfahrzeugs.

Aus der Kraftfahrzeugtechnik ist es dem Fachmann bekannt, dass an einem Lenkstockmodul eines Kraftfahrzeugs in Fahrtrichtung gesehen unmittelbar hinter dem Lenkrad liegend Lenkstockhebel zur Steuerung unterschiedlicher Funktionen des Kraftfahrzeugs angeordnet sind. Beispielsweise kann mit einem an der in Fahrtrichtung gesehen linken Seite des Lenkstockmoduls angeordneten Lenkstockhebel durch Hochheben bzw. Niederdrücken das rechte oder linke Blinkersignal betätigt werden. Durch Drücken dieses Lenkstockhebels in Fahrtrichtung nach vorne und gegebenenfalls durch das Wiederheranziehen kann ein Fernlicht an der Frontseite des Kraftfahrzeugs ein- und ausgeschaltet werden. Des Weiteren ist es bekannt, an Lenkstockhebeln Betätigungselemente für den Front- und, soweit vorhanden, für den Heckscheiben-Scheibenwischer sowie für deren Spritzwasserdüsen anzuordnen. Ferner sind Lenkstockhebel bekannt, mit denen bei einem automatischen Getriebe des Kraftfahrzeugs eine Fahrtstufe auswählbar ist. An einem Lenkstockmodul können mehrere Lenkstockhebel angeordnet sein. Üblicherweise sind an den Lenkstockhebeln Symbole zur Verdeutlichung der mit den Lenkstockhebeln bzw. den daran angeordneten Betätigungselementen zu steuernden Funktionen angebracht.

Zusätzlich sind in einem Armaturenbrett des Kraftfahrzeugs weitere Betätigungselemente, wie u. a. ein Lichtschalter zum Ein- und Ausschalten eines Abblendlichts, vorgesehen. Der Lichtschalter ist üblicherweise mit einem beleuchtbaren Symbol versehen, um bei verringerter Umgebungshelligkeit und eingeschaltetem Abblendlicht das Symbol zu hinterleuchten, wodurch der Nutzer des Kraftfahrzeugs den Lichtschalter auch bei Dunkelheit sicher betätigen kann, wenn er dies wünscht. Weiterhin ist es bekannt, Instrumente im Armaturenbrett und einem Fußraum des Kraftfahrzeugs mit geeigneten Beleuchtungsmitteln zu beleuchten. Diese Beleuchtung wird insbesondere bei Kraftfahrzeugen mit einer höherwertigen Ausstattung zur subjektiven Komforterhöhung der Insassen indirekt ausgeführt, um die Insassen nicht zu blenden.

Als nachteilig hierbei ist es anzusehen, dass die Schalter im Armaturenbrett des Kraftfahrzeugs, die mit Beleuchtungselementen versehen sind, um sie auch bei Dunkelheit sehen zu können, aufwendig in der Anschaffung sind und bei ihrem Einbau einen zusätzlichen Montageaufwand für die elektrische Stromversorgung benötigen.

Es ist Aufgabe der Erfindung, einen Lenkstockhebel der eingangs genannten Art zu schaffen, mit dem ein Komfortempfinden erhöht und der konstruktive Aufwand zur Verwirklichung einer Beleuchtung verringert ist.

Erfindungsgemäß wird die Aufgabe durch einen Lenkstockhebel gelöst, der durch ein Beleuchtungselement zur Beleuchtung eines gewünschten Bereichs im Innenraum des Kraftfahrzeuges gekennzeichnet ist.

Der Kerngedanke der Erfindung besteht darin, dass in oder an dem Lenkstockhebel ein Beleuchtungselement angeordnet ist, mit dem ein bestimmter, vom Konstrukteur ausgewählter Bereich im Innenraum des Kraftfahrzeugs beleuchtbar ist, d.h. das Beleuchtungselement, das beispielsweise im Inneren des hohlen Lenkstockhebels angeordnet ist, strahlt das von ihm ausgehende Licht durch eine Öffnung in der Wandung des Lenkstockhebels hindurch in die gewünschte Richtung aus, um, wie im Folgendem beschrieben, den bestimmten Bereich auszuleuchten. Dabei kann in der Wandung des Lenkstockhebels eine linsenartige Vorrichtung zur Bündelung und/oder Streuung des von dem Beleuchtungselement ausgehenden Lichts vorgesehen sein.

Selbstverständlich ist im Rahmen der Erfindung mit umfasst, dass mehrere an einem Lenkstockmodul des Kraftfahrzeugs angeordnete Lenkstockhebel jeweils mit einem eigenen Beleuchtungselement versehen sein können.

Der Vorteil der Erfindung liegt darin, dass an dem Lenkstockhebel, mit dem eine oder mehrere beliebige Funktionen des Kraftfahrzeugs steuerbar sind bereits elektrische Verbindungsmittel bzw. ein in der Kraftfahrzeugstechnik verwendeter Datenbus zur Signalübertragung vorhanden ist, wodurch der Einbau und die Stromversorgung des Beleuchtungselements praktisch keinen weiteren konstruktiven Aufwand erfordert.

Bevorzugt ist mit dem Beleuchtungselement, das am oder im Lenkstockhebel angeordnet ist, ein Bereich eines Armaturenbretts des Kraftfahrzeugs beleuchtbar. Dazu ist das Beleuchtungselement derart ausgerichtet, dass es sein Licht in Fahrtrichtung des Kraftfahrzeugs gesehen im Wesentlichen nach vorne abgibt, um einen bestimmten Bereich des vom Fahrer aus gesehen hinter dem Lenkstockhebel liegenden Armaturenbretts auszuleuchten. Insbesondere ist ein Schalter zum Ein- und Ausschalten des Abblendlichts mit dem Beleuchtungselement beleuchtbar ist, um für diesen Schalter eine eigene Lichtquelle einzusparen.

In gleicher Weise kann mit dem Beleuchtungselement ein Fußraum des Kraftfahrzeugs beleuchtet werden. Hierzu gibt das Beleuchtungselement sein Licht im Wesentlichen nach unten ab, wobei durch die indirekte Fußraumbeleuchtung das subjektive Komfortgefühl des Nutzers des Kraftfahrzeugs erhöht wird. Vorzugsweise wird mit dieser Beleuchtung eine Verstellvorrichtung des Fahrersitzes, beispielsweise zur Verstellung in Fahrzeuglängsrichtung, ausgeleuchtet, um die Verstellvorrichtung auch bei Dunkelheit einsehen und betätigen zu können. Ebenso ist es möglich, mit einem Beleuchtungselement, das in einem an der rechten Seite des Lenkrads angeordneten Lenkstockhebel integriert ist, eine Mittelkonsole des Kraftfahrzeugs zu beleuchten.

Weiterhin ist vorteilhafterweise mit dem Beleuchtungselement ein in Fahrtrichtung des Kraftfahrzeugs gesehen seitlicher Bereich beleuchtbar. Bei einem auf der linken Seite des Lenkstockmoduls angeordneten Lenkstockhebel ist dies der Bereich der Fahrertür. Hierbei wird vorzugsweise ein elektrischer und/oder mechanischer Fensterheber und/oder ein Türgriff beleuchtet, um diese auch bei Dunkelheit rasch auffinden zu können bzw. bei einem Schalter für einen elektrischen Fensterheber dessen separate Beleuchtung einzusparen.

Zur weiteren Verbesserung der Funktionalität des Lenkstockhebels können mit dem Beleuchtungselement die am Lenkstockhebel vorhandenen Beschriftungen und/oder Symbole zur Verdeutlichung der Funktionalität des Lenkstockhebels, vorzugsweise von hinten, beleuchtet werden, um diese Symbole auch bei verringerter Umgebungshelligkeit sehen zu können. Dazu kann das Beleuchtungselement im Inneren des Lenkstockhebels angeordnet sein, wobei die Beschriftungen und Symbole als semitransparente Kunststoffteile in der Wandung des Lenkstockhebels ausgebildet sind, um von dem Beleuchtungselement durchleuchtet zu werden.

Zweckmäßigerweise ist das Beleuchtungselement eine LED, die sich durch ihre Langlebigkeit und geringen Energieverbrauch auszeichnet. Ebenso kann das Beleuchtungselement eine Glühbirne sein.

Zur Beleuchtung unterschiedlicher Bereiche im Innenraum des Kraftfahrzeugs können an dem Lenkstockhebel auch mehrere Beleuchtungselemente vorgesehen sein, die beispielsweise ihr Licht jeweils in unterschiedliche Richtungen abgeben. Ebenso können die Beleuchtungselemente jeweils Licht unterschiedlicher Farbe und/oder Intensität je nach auszuleuchtendem Bereich abgeben.

Nach einer Weiterbildung ist das Beleuchtungselement mit einer Innenraumbeleuchtung des Kraftfahrzeugs, z. B. über eine Türöffnungs-Sensorik, gekoppelt. Das bedeutet, dass das Beleuchtungselement gemeinsam mit der Innenraumbeleuchtung ein- und ausgeschaltet wird. Beispielsweise ist das Beleuchtungselement mit einer an sich bekannten Komfortschaltung gekoppelt, mit der bei einer Annäherung des Nutzers an das Kraftfahrzeug, die beispielsweise von einer Funkfernbedienung in an sich bekannter Weise feststellbar ist, die Innenraumbeleuchtung sowie das Beleuchtungselement aktiviert wird, um dem Nutzer das Einsteigen in den bereits erleuchteten Innenraum zu erleichtern.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

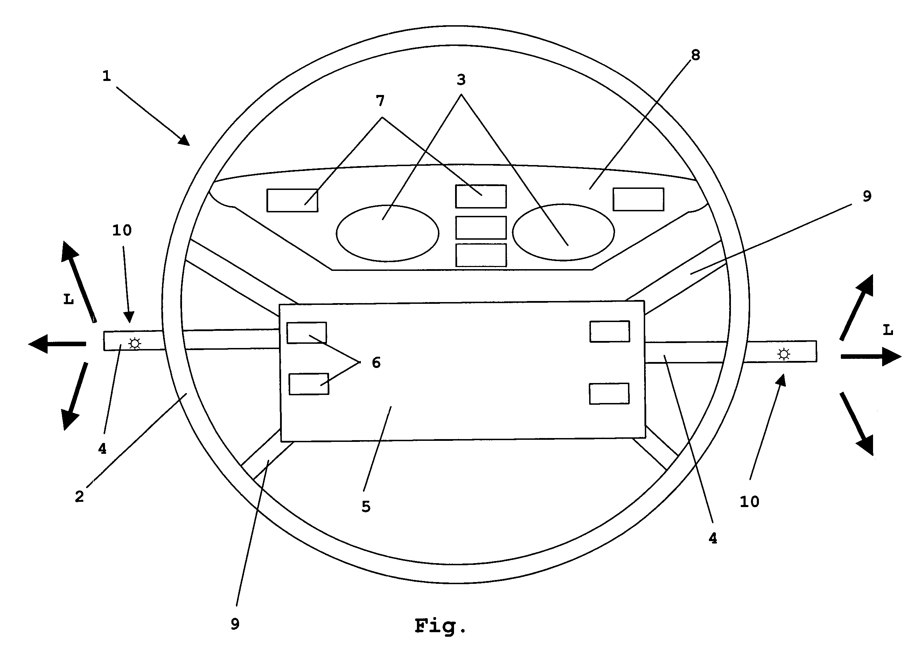

Die Erfindung wird im Folgenden anhand eines Ausführungsbeispiels unter Bezugnahme auf die zugehörige Zeichnung näher erläutert. Die einzige Fig. der Zeichnung zeigt eine schematische Darstellung eines Fahrzeug-Cockpits mit einem erfindungsgemäßen Lenkstockhebel.

Das Fahrzeug-Cockpit 1, beispielsweise eines Personenkraftwagens, besteht im Wesentlichen aus einem Lenkrad 2, das mit Speichen 9 an einer mittigen Prallplatte 5 gehaltert ist. In der Prallplatte 5 können Bedienungselemente 6, z. B. zur Steuerung eines Bordcomputers, vorgesehen sein. In Fahrtrichtung gesehen hinter dem Lenkrad 2 ist ein Armaturenbrett 8 mit Rundinstrumenten 3, beispielsweise für die Fahrzeuggeschwindigkeit und eine Motordrehzahl, angeordnet. Weiterhin sind in dem Armaturenbrett 8 weitere Anzeigevorrichtungen 7, z. B. beleuchtbare Symbole für Öldruck und Kühlwassertemperatur, vorgesehen. Zusätzlich sind an einer zur Vereinfachung der Darstellung nicht abgebildeten Lenksäule des Lenkrads 2 Lenkstockhebel 4 zur Steuerung unterschiedlicher Funktionen des Kraftfahrzeugs angeordnet. Beispielsweise kann mit dem linken Lenkstockhebel 4 ein Blinker sowie ein Fernlicht und mit dem auf der rechten Seite angeordneten Lenkstockhebel 4 ein Scheibenwischer sowie eine Scheibenwaschanlage betätigt werden.

Zur Beleuchtung unterschiedlicher Bereiche des Innenraums des Kraftfahrzeugs weist der Lenkstockhebel 4 ein zusätzliches Beleuchtungselement 10 auf, das lediglich symbolisch angedeutet ist. Wie durch die Pfeile L veranschaulicht, kann das von dem Beleuchtungselement 10, einer Glühbirne oder einer LED, ausgehende Licht in unterschiedliche Richtungen in den Innenraum des Kraftfahrzeugs abgegeben werden, um u. a. einen seitlichen Bereich an der Fahrertür, einen Fußraum oder einen Bereich am Armaturenbrett des Kraftfahrzeugs, insbesondere den Schalter für das Abblendlicht, zu beleuchten. Es ist auch möglich, dass mehrere unterschiedliche Beleuchtungselemente 10 in oder an dem gleichen Lenkstockhebel 4 angeordnet sind, vorzugsweise mit unterschiedlichen Farben und/oder Intensitäten. Ferner können an zwei oder mehr Lenkstockhebeln 4 jeweils Beleuchtungselemente 10 vorgesehen sein.

### Bezugszeichenliste

- 1.: Kraftfahrzeug-Cockpit
- 2.: Lenkrad
- 3.: Rundinstrument
- 4.: Lenkstockhebel
- 5.: Prallplatte
- 6.: Taster in Prallplatte
- 7.: Anzeigemittel
- 8.: Armaturenbrett
- 9.: Speiche des Lenkrads
- 10.: Beleuchtungselement
- L: Pfeil

## Patentansprüche

1. Lenkstockhebel eines Lenkstockmoduls eines Kraftfahrzeugs, **gekennzeichnet durch** ein Beleuchtungselement (10) zur Beleuchtung eines gewünschten Bereichs im Innenraum des Kraftfahrzeuges.

2. Lenkstockhebel nach Anspruch 1, **dadurch gekennzeichnet, dass** mit dem Beleuchtungselement (10) ein Bereich eines Armaturenbretts (8) des Kraftfahrzeugs beleuchtbar ist, insbesondere ein Lichtschalter.

3. Lenkstockhebel nach Anspruch 1 oder 2, **dadurch gekennzeichnet, dass** mit dem Beleuchtungselement (4) ein Fußraum des Kraftfahrzeugs beleuchtbar ist, insbesondere eine Vorrichtung zur Verstellung eines Fahrersitzes.

4. Lenkstockhebel nach einem der Ansprüche 1 bis 3, **dadurch gekennzeichnet, dass** mit dem Beleuchtungselement (4) ein in Fahrtrichtung des Kraftfahrzeugs gesehen seitlicher Bereich beleuchtbar ist, insbesondere ein Fensterheber und/oder ein Türgriff.

5. Lenkstockhebel nach einem der Ansprüche 1 bis 4, **dadurch gekennzeichnet, dass** mit dem Beleuchtungselement (10) Symbole und Beschriftungen am Lenkstockhebel (4) beleuchtbar sind.

6. Lenkstockhebel nach einem der Ansprüche 1 bis 5, **dadurch gekennzeichnet, dass** das Beleuchtungselement (10) eine LED oder eine Glühbirne ist.

7. Lenkstockhebel nach einem der Ansprüche 1 bis 6, **dadurch gekennzeichnet, dass** mehrere Beleuchtungselemente (10) am Lenkstockhebel (4) vorgesehen sind, insbesondere mit unterschiedlichen Farben und/oder Intensitäten.

8. Lenkstockhebel nach einem der Ansprüche 1 bis 7, **dadurch gekennzeichnet, dass** das Beleuchtungselement (10) mit einer Innenraumbeleuchtung gekoppelt ist, insbesondere mit einer Türöffnungs-Sensorik.
